# EUROPEAN PATENT SPECIFICATION

(11) **EP 1 405 777 B1**
(45) Date of publication and mention of the grant of the patent: **29.06.2005**
(21) Application number: 02256899.2
(22) Date of filing: 03.10.2002
(51) Int. Cl.: B60R 22/34

(54) **Retractor**
Aufroller
Enrouleur

(43) Date of publication of application: 07.04.2004
(73) Proprietor: KEY SAFETY SYSTEMS, INC., Sterling Heights, Michigan 48314 (US)
(72) Inventor: Bell, John, Carlisle, Cumbria (GB); Palliser, Martyn, Dalston, Carlisle, Cumbria (GB); Jack, Brian, Eastriggs, Cumbria (GB); Barber, Matthew, Carlisle, Cumbria (GB)
(74) Representative: Freeman, Jacqueline Carol

(56) References cited:
- EP-A- 1 180 457
- US-A- 6 131 843
- US-A1- 2002 050 542

## Description

The present invention relates to a retractor and particularly to a retractor with a load limiting function for use in a vehicle safety restraint seat belt.

Traditionally a retractor comprises a generally cylindrical spool on which seat belt webbing is wound. It is mounted to be rotatable about its longitudinal axis to wind in or pay out seat belt webbing, depending upon the direction of rotation. The spool is biased in the wind-in direction by a clock spring so that the belt maintains a relatively low level force on the vehicle occupant tending to pull him back into the vehicle seat in a comfortable manner but allowing him to move forward, for example to adjust a car radio or access a storage compartment in the car. An acceleration sensor detects acceleration or deceleration above a predetermined level, as an indication of a crash event, and locks the retractor against further pay-out of webbing to securely restrain the occupant in the vehicle seat and prevent impact with the inside walls of the vehicle thus resisting injury.

In modern seat belts a load limiting function is incorporated in the restraint because it was found that sudden locking of the retractor, especially at the high speeds achieved by modern vehicles, could cause injury to the occupant from the restraining forces exerted by the seat belt itself. To reduce this phenomena modern retractors allow some controlled payout of the webbing before locking fully, so as to more gradually decrease the momentum of the occupant. This is often achieved using a torsion bar mounted coaxially in the spool. The torsion bar twists about its own axis, after the spool mechanism is locked and typically allows up to two turns of the spool. In this way the crash forces felt by the occupant are reduced: they increase linearly as the crash forces increase, until the torsion bar begins to turn, and then the force curve flattens off while the energy is absorbed by the torsion bar turning until the spool locks fully by which time the crash force is beginning to dissipate.

In an improved load-limiting retractor described in co-pending UK application 0208702, a second stage of operation is provided by a wire element housed in the spool body. The wire element works in parallel with the torsion bar to create a higher level of load limiting for a predetermined time or distance. Thus when the crash sensor first senses a crash a first stage of operation involves both the torsion bar twisting and the wire being either bent or twisted or pulled out of its housing in the spool to absorb the crash forces. When the wire is fully bent, twisted or extended (depending on the mechanism employed) then the crash forces are applied solely to the torsion bar and a second stage of operation involves only the torsion bar. This second stage, with its lower level of load limiting, works in conjunction with an air bag to share the load.

However a disadvantage arises if a second impact occurs because the air bag has deployed in the first impact and is no longer effective to share the restraining load with the retractor. Hence it is desirable for the retractor to revert to working as a standard non load-limiting retractor in case of a second impact.

US 2002/050542 which shows the features of the preamble of claim 1 also discloses a load limiting seat belt retractor which has a secondary load limiting mechanism and a loading element resiliently biased to a position in which it locks the spool to the locking wheel.

The present invention can provide the advantage of improving the crash force curve further and effectively restraining the occupant during a second impact.

According to the present invention there is provided a seat belt retractor comprising: a spool mounted for rotation in the retractor for retraction or pay-out of seat belt webbing wound thereon, depending upon the rotation direction of the spool; a locking wheel attached to one end of the spool; locking means for locking the spool to the locking wheel when a crash condition is sensed; and force limiting means for allowing further pay-out of the seat belt webbing, after the spool has locked to the locking wheel, under the influence of an occupant's forward momentum, wherein the force limiting means comprises a torsion bar attached at one end to the locking wheel and at the other end to the spool; and a secondary force limiting mechanism releasably coupled in the force path between the spool and the locking wheel; and means for de-coupling the secondary mechanism after a predetermined number of turns of the torsion bar, wherein the locking means comprises a locking element which is resiliently biased to a position wherein it locks the spool to the locking wheel and is held out of locking engagement by the secondary force limiting mechanism wherein the locking wheel comprises a recess along which the locking element slides, and an abutment against which the locking element rests at the end of the recess.

Preferably the secondary mechanism comprises a wire releasably connected between the spool and the locking wheel.

According to a preferred embodiment the wire is releasably connected to the spool, preferably between the spool and the locking wheel.

The wire may be housed in at least one hole in the spool body and pulled out or extracted from the hole during load limiting. It may be drawn onto the locking wheel.

The thickness, length and composition of the wire is chosen to suit a vehicle's crash criteria.

For a better understanding of the present invention, and to show how the same may be carried into effect, reference will now be made to the accompanying drawings in which:
- Figure 1: is a part cut-away perspective view of the spool and locking assembly of a retractor according to the present invention;
- Figure 2: is a perspective view of a locking wheel assembly for one end of the retractor of figure 1;
- Figure 3: is an end view of the locking mechanism shown in figure 2;
- Figure 4: is a part cut-away view of the spool and locking assembly of figure 1 from the locking wheel end;
- Figure 5: is a part cut-away perspective view of the retractor of figure 1 in a second stage of operation;
- Figure 6: is a view of the locking wheel end of the retractor of figure 5;
- Figure 7: is a part cut-away perspective view of the retractor of figure 1 in a second stage of operation.
- Figure 8: is a view of the locking wheel end of the retractor of figure 7;
- Figure 9: is a graph of force against time showing various stages of the crash curve.

The retractor of the invention is of the general form described in co-pending UK application GB 0208702 and the figures show only the spool and locking assembly part of the retractor. It will be evident to a skilled person how this part is integrated into a full retractor.

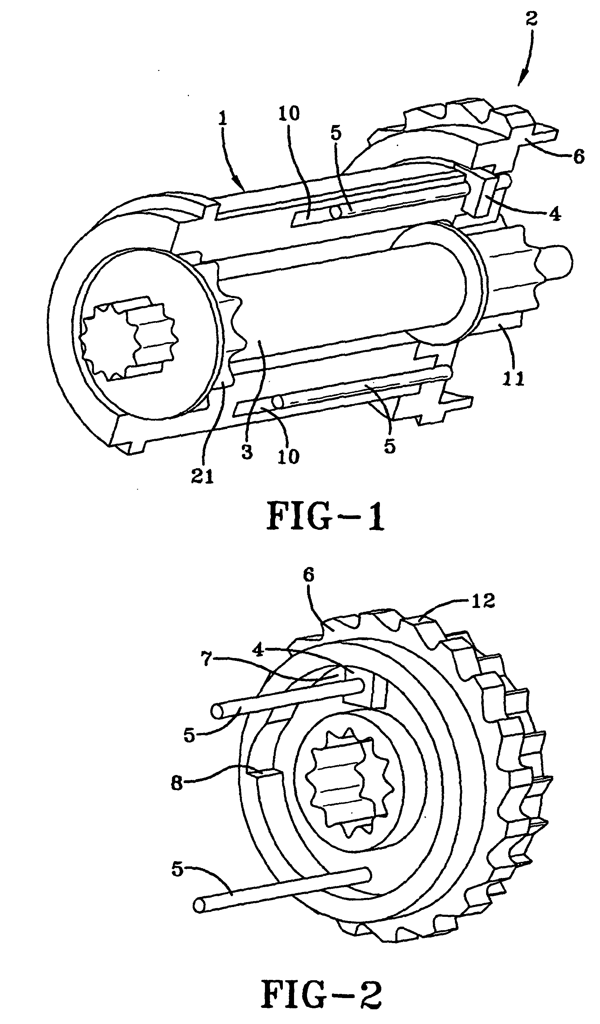

In figure 1 a hollow spool 1 is shown part cut-away with a locking assembly 2 at one end and a torsion bar 3 arranged along its axis. The torsion bar 3 is fixed to the spool (1), at the near end as shown in figure 1 by splines 21. It is fixed to the locking assembly 2, at the far end as shown in figure 1, by means of splines 11 fitting in a correspondingly shaped hole in the locking assembly 2. Although not shown, seat belt webbing is wound around the outside of the spool 1 and the spool 1 is supported in a frame for rotation about its longitudinal axis. A rewind spring for the spool 1 is mounted to the near end (as shown in figure 1).

A secondary locking means is shown comprising a length of load limiting wire 5 having its ends extending into two holes 10 in the spool body 1 and passing through a locking element 4 and through a locking wheel 6 forming part of the locking assembly 2.

This is shown more clearly in figure 2 wherein the wire 5 extends axially through and beyond the locking wheel 6 into the holes 10.

The wire 5 holds the locking element 4 out of engagement with the locking wheel 6 against the action of a spring load.

In a crash a sensor attached to the retractor detects a sudden change in speed or direction of the vehicle and moves a lock bar (not shown) to engage teeth 12 on the locking wheel 6 to lock the spool 1 against rotation (subject to movement due to load limiting arrangements). Once the spool 1 is locked then the crash force transfers to the torsion bar 3 and above a predetermined value causes it to twist about its axis allowing the spool 1 to rotate under conditions determined by the properties of the torsion bar 3. Usually the spool 1 rotates up to a further two turns.

During this time the wire 5 is also being pulled out of the body of the spool 1 providing an additional secondary load limiting effect during a first stage of operation. The combination of the torsion bar 3 and the secondary load limiting wire 5 raises the initial load limiting threshold giving a higher combined level of load limiting than the torsion bar alone, ie holding the occupant back in their seat until the air bag is fully deployed to share the restraining load.

At the end of the first stage, at the point where the air bag is fully deployed, the wire 5 has been fully pulled out of the spool body (1) releasing the locking element 4 to eject into the locking wheel 6 and engage into a recess 7 in the locking wheel 6. Thus during a second stage the locking wheel 6 continues to turn under the influence of the crash forces until the locking element 4 reaches an abutment 8 at the end of the recess 7. At this point the locking element 4 connects the spool 1 and the locking wheel 6 together preventing any further load limiting and this constitutes a third stage of operation. The length of the recess 7 and the position of the abutment 8 can be varied to adjust the crash curve as required by the car manufacturer's specification, by providing a longer or shorter dwell period at the torsion bar only load level (second stage). Ideally the abutment isn't reached in the first impact.

In the third stage of operation the retractor functions as a standard retractor without any load limiting function and will restrain the occupant appropriately for a second impact. This is particularly important because the airbag will usually have deployed in a first impact and thus the seat belt is the only restraint.

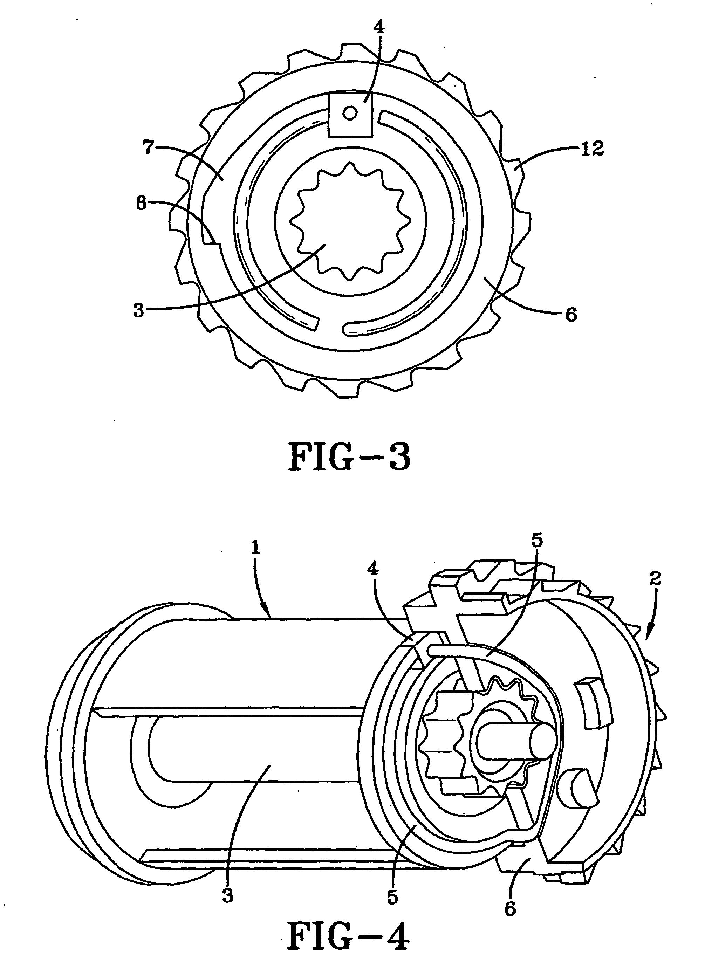

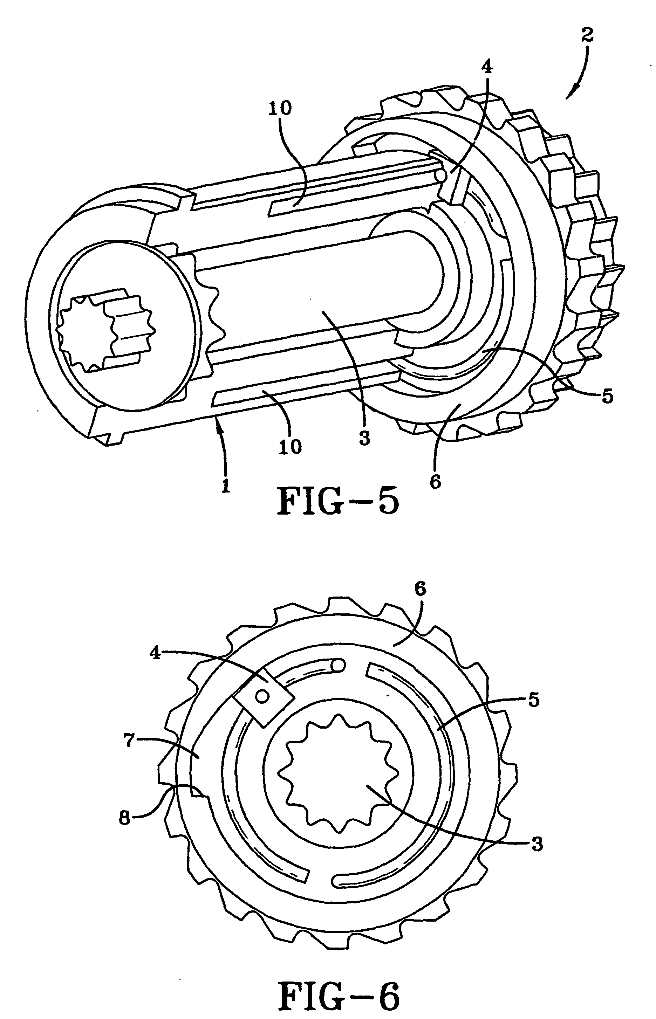

Figures 3 and 4 show the end of the first stage of operation wherein the wire 5 has been fully pulled out of the holes 10 in the body of the spool 1 and bent round into a space in the locking wheel 6. At this point the locking element 4 is released from the body of the spool 1 and its spring load ejects it into the recess 7 in the locking wheel 6 to connect the spool to the locking wheel 6 and start the second stage of load limiting. The spool 1 continues to turn under the influence of crash forces as the torsion bar continues to twist and the locking element 4 moves relative to the locking wheel 6, as shown in figure 6, by sliding along the recess 7 until it reaches the stop abutment 8.

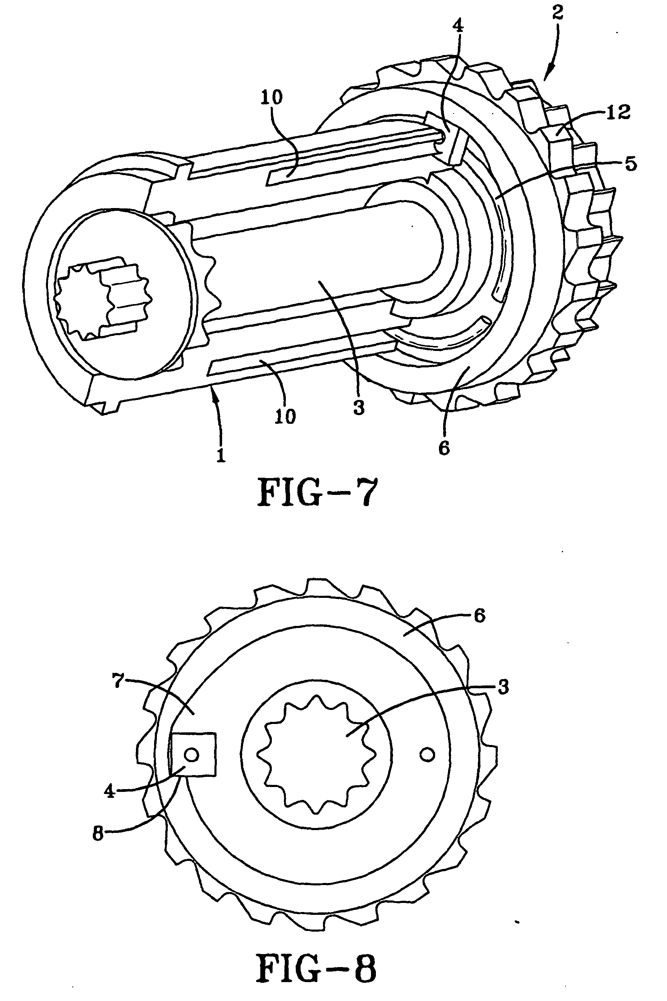

When the locking element 4 contacts the abutment 8 as shown in figures 7 and 8 then the locking element 4 is locked with the locking wheel 6 and no further load limiting is effective. This third stage puts the retractor into a standard operational format whereby the spool (1) is locked against webbing pay-out and thus restrains the occupant effectively against secondary crash forces.

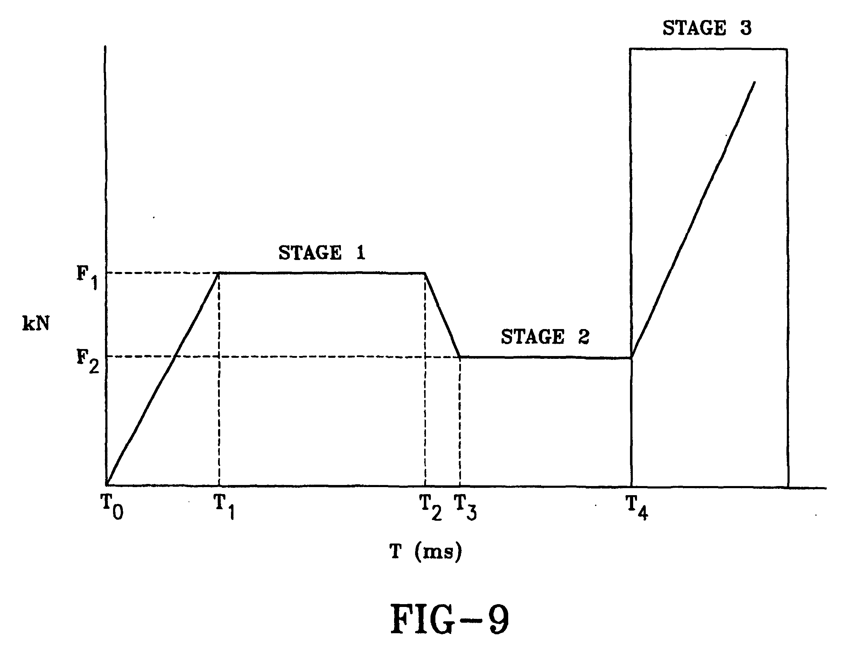

Figure 9 is a digressive load limiting graph showing how a crash force is felt by the vehicle occupant over a period of time. At TO a crash occurs causing a sudden deceleration or change of direction of the vehicle which is detected by a crash sensor and brings the locking mechanism into effect. During the period TO to T1 the crash forces on the occupant increase linearly, to a force level F1. At T1 the first stage of operation comes into effect provided by the wire 5 and the torsion bar 3 and the force levels out at F1 during the period T1 to T2. At time T2 the wire 5 is fully extended and the locking element 4 is released to move relative to the locking wheel 6. Thus the force felt by the occupant decreases to a level F2 provided by the torsion bar 3 alone. Over the period T3 to T4 the locking element 4 moves round the recess 7. At time T4 the locking element 4 engages abutment 8 and locks the retractor fully, preventing further twisting of the torsion bar 3. From time T4 onwards the retractor is fully locked and acting as a standard retractor. If the crash forces are continuing to rise then the occupant will feel linearly increasing forces during this third stage as shown. However by this time the crash forces from the primary impact will usually have dissipated. The graph shows the situation for a secondary impact at around time T4.

## Claims

1. A seat belt retractor comprising: a spool (1) mounted for rotation in the retractor, for retraction or pay-out of seat belt webbing wound thereon depending upon the rotation direction of the spool (1); a locking wheel (6) coupled to one end of the spool (1) via a force limiting means for allowing further pay-out of the seat belt webbing under the influence of an occupant's forward momentum after the locking wheel (6) has locked; first locking means for locking the locking wheel (6) when a crash condition is sensed; and wherein the force limiting means comprises a torsion bar (3) attached at one end to the locking wheel (6) and at the other end to the spool (1); a secondary force limiting mechanism releasably coupled in the force path between the spool (1) and the locking wheel (6); and means for de-coupling the secondary mechanism after a predetermined number of turns of the torsion bar (3), whereby the retractor comprises a secondary locking element (4) which is resiliently biased to urge in a position wherein it locks the spool (1) to the locking wheel (6), and is held out of locking engagement by the secondary force limiting mechanism, **characterised in that** the locking wheel (6) comprises a recess (7) along which the locking element (4) slides, and an abutment (8) against which the locking element (4) rests at the end of the recess (7).

2. A retractor according to claim 1 wherein the secondary force limiting mechanism comprises a wire (5) releasably connected between the spool (1) and the locking wheel (6).

3. A retractor according to claim 1 or claim 2 wherein the wire (5) is releasably connected to the spool (1).

4. A retractor according to any one of the preceding claims wherein the wire (5) is housed in a hole (10) in the spool body (1) from which it is pulled during load limiting.

5. A retractor according to any one of claims 1 to 4 wherein the wire (5) is drawn onto the locking wheel (6) during load limiting.

6. A retractor according to any one of the preceding claims wherein the thickness, length and composition of the wire (5) is chosen to suit a vehicle's crash criteria.

## Patentansprüche

1. Sicherheitsgurt-Aufrollvorrichtung, die folgendes aufweist: eine zur Drehung in der Aufrollvorrichtung angebrachte Spule (1) zum Aufrollen oder Ausgeben eines um dieselbe gewickelten Sicherheitsgurtbands in Abhängigkeit von der Drehrichtung der Spule (1), ein Sperr-Rad (6), an das eine Ende der Spule (1) gekoppelt über ein kraftbegrenzendes Mittel, um nach dem Verriegeln des Sperr-Rades (6) ein weiteres Ausgeben des Sicherheitsgurtbandes unter dem Einfluß einer vorwärts gerichteten Bewegungsenergie des Fahrzeuginsassen zu ermöglichen, erste Verriegelungsmittel zum Verriegeln des Sperr-Rades (6), wenn eine Crash-Situation festgestellt wird, und wobei das kraftbegrenzende Mittel einen Torsionsstab (3) umfaßt, an dem einen Ende an dem Sperr-Rad (6) und an dem anderen Ende an der Spule (1) befestigt, einen sekundären kraftbegrenzenden Mechanismus, lösbar in den Kraftweg zwischen der Spule (1) und dem Sperr-Rad (6) gekoppelt, und Mittel zum Auskoppeln des sekundären Mechanismus' nach einer vorher festgelegten Zahl von Umdrehungen des Torsionsstabs (3), wodurch die Aufrollvorrichtung ein sekundäres Verriegelungselement (4) umfaßt, das elastisch vorgespannt wird, um in eine Position zu drängen, in der es die Spule (1) am Sperr-Rad (6) verriegelt und außer Eingriff durch den sekundären kraftbegrenzenden Mechanismus gehalten wird, **dadurch gekennzeichnet, daß** das Sperr-Rad (6) eine Aussparung (7), längs derer das Verriegelungselement (4) gleitet, und ein Widerlager (8) umfaßt, an dem das Verriegelungselement (4) am Ende der Aussparung (7) ruht.

2. Aufrollvorrichtung nach Anspruch 1, bei welcher der sekundäre kraftbegrenzende Mechanismus einen Draht (5) umfaßt, lösbar zwischen die Spule (1) und das Sperr-Rad (6) gekoppelt.

3. Aufrollvorrichtung nach Anspruch 1 oder Anspruch 2, bei welcher der Draht (5) lösbar mit der Spule (1) verbunden wird.

4. Aufrollvorrichtung nach einem der vorhergehenden Ansprüche, bei welcher der Draht (5) in einem Loch (10) im Spulenkörper (1) untergebracht wird, aus dem er während des Lastbegrenzens herausgezogen wird.

5. Aufrollvorrichtung nach einem der Ansprüche 1 bis 4, bei welcher der Draht (5) während des Lastbegrenzens auf das Sperr-Rad (6) gezogen wird.

6. Aufrollvorrichtung nach einem der vorhergehenden Ansprüche, bei der die Dicke, Länge und Zusammensetzung des Drahts (5) so ausgewählt werden, daß sie zu den Aufprallkriterien eines Fahrzeugs passen.

## Revendications

1. Enrouleur de ceinture de sécurité, comprenant: une bobine (1) montée de sorte à pouvoir tourner dans l'enrouleur pour enrouler ou dérouler la sangle de la ceinture de sécurité qui y est enroulée, en fonction de la direction de rotation de la bobine (1); une roue de blocage (6) fixée sur une extrémité de la bobine (1) par l'intermédiaire d'un moyen de limitation de la force, pour permettre un déroulement ultérieur de la sangle de la ceinture de sécurité sous l'influence du déplacement vers l'avant d'un occupant après le verrouillage de la roue de blocage (6); un premier moyen de verrouillage pour verrouiller la roue de blocage (6) lors de la détection d'un état de collision; le moyen de limitation de la charge comprenant une barre de torsion (3) fixée au niveau d'une extrémité sur la roue de blocage (6) et au niveau de l'autre extrémité sur la bobine (1); un mécanisme secondaire de limitation de la force, couplé de manière amovible dans la trajectoire de force entre la bobine (1) et la roue de blocage (6); et un moyen pour désaccoupler le mécanisme secondaire après un nombre de rotations prédéterminé de la barre de torsion (3), l'enrouleur comprenant un élément de verrouillage secondaire (4) poussé de manière élastique dans une position dans laquelle il verrouille la bobine (1) à la roue de blocage (6) et est retenue dégagé d'un engagement de verrouillage par le mécanisme secondaire de limitation de la force, **caractérisé en ce que** la roue de blocage (6) comprend un évidement (7) le long duquel glisse l'élément de verrouillage (4) et une butée (8) contre laquelle l'élément de verrouillage (4) repose au niveau de l'extrémité de l'évidement (7).

2. Enrouleur selon la revendication 1, dans lequel le mécanisme secondaire de limitation de la force comprend un fil métallique (5) connecté de manière amovible entre la bobine (1) et la roue de blocage (6).

3. Enrouleur selon les revendications 1 ou 2, dans lequel le fil métallique (5) est connecté de manière amovible sur la bobine (1).

4. Enrouleur selon l'une quelconque des revendications précédentes, dans lequel le fil métallique (5) est logé dans un trou (10) dans le corps de la bobine (1), dont il est extrait lors de la limitation de la charge.

5. Enrouleur selon l'une quelconque des revendications 1 à 4, dans lequel le fil métallique (5) est tiré sur la roue de blocage (6) au cours de la limitation de la charge.

6. Enrouleur selon l'une quelconque des revendications précédentes, dans lequel l'épaisseur, la longueur et la composition du fil métallique (5) sont choisies de sorte à s'adapter aux critères de collision du fabricant du véhicule.
